# FASCICULE DE BREVET EUROPEEN

(11) **EP 0 912 322 B1**
(45) Date de publication et mention de la délivrance du brevet: **11.09.2002**
(21) Numéro de dépôt: 97930550.5
(22) Date de dépôt: 18.06.1997
(51) Int. Cl.: B29C 70/48, B29C 70/54

(54) **PROCEDE DE FABRICATION DE PIECES EN MATERIAU COMPOSITE, PAR MOULAGE PAR TRANSFERT DE RESINE**
VERFAHREN ZUM HERSTELLEN VON VERBUNDMATERIALGEGENSTÄNDEN DURCH TRANSFERGIESSEN VON HARZ
METHOD FOR MANUFACTURING COMPOSITE MATERIAL PIECES BY RESIN TRANSFER MOULDING

(30) Priorité: 19.06.1996 FR 9607624
(43) Date de publication de la demande: 06.05.1999
(73) Titulaire: AEROSPATIALE Société Nationale Industrielle, 75781 Paris Cédex 16 (FR)
(72) Inventeur: BOCCARD, Alexis, F-92130 Issy-les-Moulineaux (FR); CHEVASSUS, Nicolas, F-92152 Chaville (FR)
(74) Mandataire: Poulin, Gérard
(86) Numéro de dépôt international: FR9701096
(87) Numéro de publication internationale: WO97048546

(56) Documents cités:
- EP-A- 0 729 822
- FR-A- 2 720 028
- US-A- 3 137 750
- US-A- 5 516 271
- US-A- 5 518 388

## Description

### Domaine technique

L'invention concerne un procédé de fabrication de pièces en matériau composite, utilisant la technique de moulage par transfert de résine, appelée technique RTM (de l'anglais "Resin Transfer Molding").

Plus précisément, le procédé selon l'invention est destiné à la fabrication à l'échelle industrielle de pièces en matériau composite de grandes dimensions, présentant un taux volumique de fibres élevé, c'est-à-dire supérieur à 58 %.

Cet objectif rend le procédé selon l'invention particulièrement attractif dans l'industrie aérospatiale. Ainsi, des pièces fabriquées selon ce procédé peuvent notamment entrer dans la constitution des avions, hélicoptères, lanceurs, missiles, etc..

### Etat de la technique

L'industrie aérospatiale utilise depuis de nombreuses années les matériaux composites. En effet, ces matériaux permettent notamment des gains de masse importants tout en procurant des caractéristiques de rigidité et des performances mécaniques comparables à celles des pièces métalliques.

Dans ce contexte, différentes techniques connues sont utilisées, selon la nature et les dimensions de la pièce à fabriquer. Parmi ces techniques, on citera notamment l'enroulement filamentaire, l'injection et l'estampage de matériaux thermoplastiques et surtout le moulage en autoclave de tissus préimprégnés de résine thermodurcissable.

Dans le cas particulier de la fabrication de pièces de grandes dimensions telles que des éléments de voilure ou de fuselage, les contraintes mécaniques spécifiques au domaine aéronautique imposent un taux volumique de fibres élevé, c'est-à-dire supérieur à 58 %. Dans l'état actuel de la technique, de telles pièces en matériau composite sont réalisées à partir de tissus préimprégnés de résine thermodurcissable. La fabrication s'effectue alors par drapage des tissus sur une forme, puis en comprimant les tissus en les recouvrant d'une vessie étanche dans laquelle on fait le vide. L'ensemble est ensuite placé dans un autoclave afin d'y subir un cycle thermique assurant la polymérisation de la résine.

Dans d'autres domaines tels que l'industrie automobile, l'industrie des biens d'équipement, etc., on utilise depuis de nombreuses années la technique de moulage par transfert de résine, ou technique RTM, pour fabriquer des pièces présentant un taux volumique de fibres relativement faible, c'est-à-dire inférieur à 54 %. Cette technique de moulage consiste à introduire une préforme fibreuse sèche dans un moule, puis à injecter sous vide et sous faible pression une résine organique liquide dans le moule, de façon à imprégner la préforme fibreuse. Le chauffage de la préforme imprégnée de résine permet de polymériser cette dernière avant de procéder au démoulage.

Cette technique RTM est actuellement relativement bien maîtrisée pour l'obtention de pièces faiblement chargées en fibres, c'est-à-dire présentant un taux volumique de fibres inférieur à 54 %.

Ainsi, dans le document US-A-3 137 750, il est proposé de fabriquer, par moulage par transfert de résine, une pièce en matériau composite, dont le taux de fibres est compris entre 32,4 % et 39 %. Une préforme en fibres de verre est placée dans un moule, dans lequel on injecte une résine à une pression que l'on fait varier de façon cyclique, pendant toute la durée de l'injection, par exemple entre 0 et 10 kg/cm², de 0,2 à 5 fois par seconde. La variation cyclique de la pression est commandée par une vanne rotative. Pendant l'injection de la résine, on réalise une ouverture limitée et une fermeture de moule selon un cycle dont la fréquence et l'amplitude sont liées aux variations cycliques de la pression d'injection. Ce cycle est tel que l'ouverture du moule et la pression d'injection sont simultanément maximales, et inversement.

Par rapport aux autres techniques de mise en oeuvre des matériaux composites, la technique RTM présente de nombreux avantages tels que la réduction du temps global de mise en oeuvre, le faible niveau d'investissement pour l'ensemble de la chaîne de fabrication (pas de système réfrigérant ni d'autoclave), le calibrage précis des dimensions de la pièce obtenue, notamment en épaisseur, le très bon état de surface, les conditions d'hygiène et de sécurité particulièrement bonnes, etc..

Cependant, lorsqu'on désire réaliser des pièces fortement chargées en fibres, c'est-à-dire présentant un taux volumique de fibres supérieur à 58 %, comme l'imposent notamment les industries aéronautique et spatiale, l'injection de la résine dans le moule contenant la préforme fibreuse sèche doit se faire alors que cette préforme est fortement compactée. Dans ses procédures de mise en oeuvre connues, la technique RTM ne permet pas de fabriquer des pièces de grandes dimensions présentant un tel compactage.

En effet, la très forte perte de charge introduite par les fibres textiles fortement compactées de la préforme ralentit la pénétration de la résine dans cette dernière.

Par ailleurs, la pression d'injection de la résine doit rester suffisamment faible pour que l'orientation des fibres textiles de la préforme reste inchangée lors de l'injection. En effet, on sait que les caractéristiques mécaniques de la pièce obtenue sont essentiellement définies par l'orientation des fibres textiles contenues dans la matrice de résine.

Par conséquent, lorsque le volume de la pièce à fabriquer augmente, le temps nécessaire à la pénétration de la résine dans la totalité du moule dépasse le temps au-delà duquel la résine commence à polymériser (habituellement appelé "temps de gel"). De plus, l'obstacle à la pénétration de la résine que constituent les fibres textiles fortement compactées risque de créer dans la pièce des zones non imprégnées de résine ainsi que des microbulles.

Pour ces différentes raisons, la technique RTM reste à l'heure actuelle pratiquement inutilisée pour la fabrication de pièces de grandes dimensions fortement chargées en fibres.

Des procédés plus ou moins complexes ont été développés ces dernières années, notamment dans les techniques de moulage par injection, afin de piloter au mieux les différents paramètres d'injection tels que le débit, la pression, la température, etc., en tenant compte de la géométrie de la pièce que l'on fabrique. Les documents US-A-5 178 805, US-A-5 316 707 et US-A-4 850 217 illustrent à titre d'exemples différents procédés développés dans cet esprit.

Cependant, il n'existe pas à l'heure actuelle de procédé équivalent dans le domaine du moulage par transfert de résine, permettant de fabriquer des pièces de grandes dimensions et présentant un taux de fibres élevé, en résolvant les problèmes énoncés précédemment.

### Exposé de l'invention

L'invention a précisément pour objet un procédé de fabrication de pièces en matériau composite par moulage par transfert de résine, permettant de fabriquer des pièces de grandes dimensions et présentant un taux volumique de fibres supérieur à 58 %, en garantissant à la pièce obtenue une porosité particulièrement faible (1 à 3 %), sans risque de gélification prématurée de la résine ou de présence de zones non imprégnées de résine à l'intérieur de la pièce.

Selon l'invention, ce résultat est obtenu au moyen d'un procédé de fabrication de pièces en matériau composite, par moulage par transfert de résine dans un moule contenant une préforme fibreuse, caractérisé par le fait qu'il comprend les étapes suivantes :
a)fort compactage de la préforme fibreuse dans le moule, de façon à obtenir un taux volumique de fibres supérieure à 58 %, et injection simultanée de résine dans le moule à un débit de consigne constant, tant qu'une pression instantanée à l'entrée du moule est inférieure à une consigne de pression ;
b)réduction du débit d'injection de la résine dans le moule, de façon à maintenir la pression instantanée à une valeur sensiblement égale à la consigne de pression, lorsque cette consigne est atteinte ;
c)réduction temporaire du compactage de la préforme fibreuse dans le moule ;
d)remontée progressive du débit d'injection de la résine dans le moule, jusqu'au débit de consigne ; et
e)retour à l'étape a).

Dans le procédé ainsi défini, les étapes b) à d) sont des étapes transitoires, de durées relativement courtes, qui ont pour effet de ramener les conditions d'injection de la résine dans un état nominal dans lequel l'injection se fait à un débit constant, conformément à l'étape a). Le passage à l'une des étapes transitoires b) à d) peut avoir des origines diverses telles que la présence d'un point froid dans le moule, une variation de la viscosité de la résine, une fuite dans le système hydraulique, ou encore le décompactage de la préforme fibreuse. Ce passage peut donc se produire plusieurs fois au cours de la fabrication d'une même pièce.

Si l'opérateur réduit la consigne de pression, pour une raison quelconque, au cours de l'injection de la résine dans le moule, cela entraîne automatiquement un passage immédiat à l'étape b) lorsque la pression instantanée à l'entrée du moule est au moins égale à la nouvelle consigne de pression.

Dans une mise en oeuvre préférentielle du procédé selon l'invention, on élabore en permanence un signal de régulation de débit, à partir d'au moins un premier signal représentatif d'une différence entre la consigne de pression et la pression instantanée à l'entrée du moule. On compare ensuite ce signal de régulation de débit au débit de consigne, pour émettre un signal de commande. Lorsque le signal de régulation de débit est au moins égal au débit de consigne, ce signal de commande pilote l'injection de la résine au débit de consigne constant, conformément à l'étape a). Au contraire, lorsque le signal de régulation de débit est inférieur au débit de consigne, le signal de commande pilote l'injection de la résine à un débit réduit qui varie avec le signal de régulation de débit, conformément à l'étape b).

De préférence, on élabore le signal de régulation de débit également à partir d'un deuxième signal représentatif de la différence entre deux premiers signaux consécutifs.

Le signal de commande peut notamment être un signal de vitesse, injecté dans un variateur de vitesse associé à un moteur électrique de commande d'un vérin d'injection de la résine dans le moule.

On élabore alors le signal de régulation de débit également à partir d'un troisième signal représentatif d'une différence entre une pression maximale admissible à la sortie du vérin et une pression instantanée mesurée à la sortie du vérin.

On peut aussi injecter dans le variateur de vitesse un signal représentatif d'un couple maximal autorisé pour le moteur électrique.

Dans la forme de réalisation préférentielle de l'invention, on élabore le signal de régulation de débit en logique floue.

### Brève description des dessins

On décrira à présent, à titre d'exemple non limitatif, un mode préférentiel de mise en oeuvre du procédé selon l'invention, en se référant aux dessins annexés, dans lesquels :
- la figure 1 est une vue en coupe qui illustre de façon très schématique une installation de fabrication d'une pièce en matériau composite selon la technique RTM, adaptée à la mise en oeuvre du procédé conforme à l'invention ;
- les figures 2A à 2D illustrent de façon très schématique les principales étapes de mise en oeuvre du procédé selon l'invention ;
- la figure 3 est un schéma bloc qui illustre de façon fonctionnelle les différents moyens permettant de mettre en oeuvre le procédé de l'invention, dans l'installation de la figure 1 ; et
- les figures 4A, 4B, 4C et 4D représentent les fonctions d'appartenance des trois grandeurs d'entrée et de la grandeur de sortie de la carte de régulation en logique floue utilisée dans la forme de réalisation illustrée sur la figure 3.

### Exposé détaillé d'un mode préférentiel de mise en oeuvre

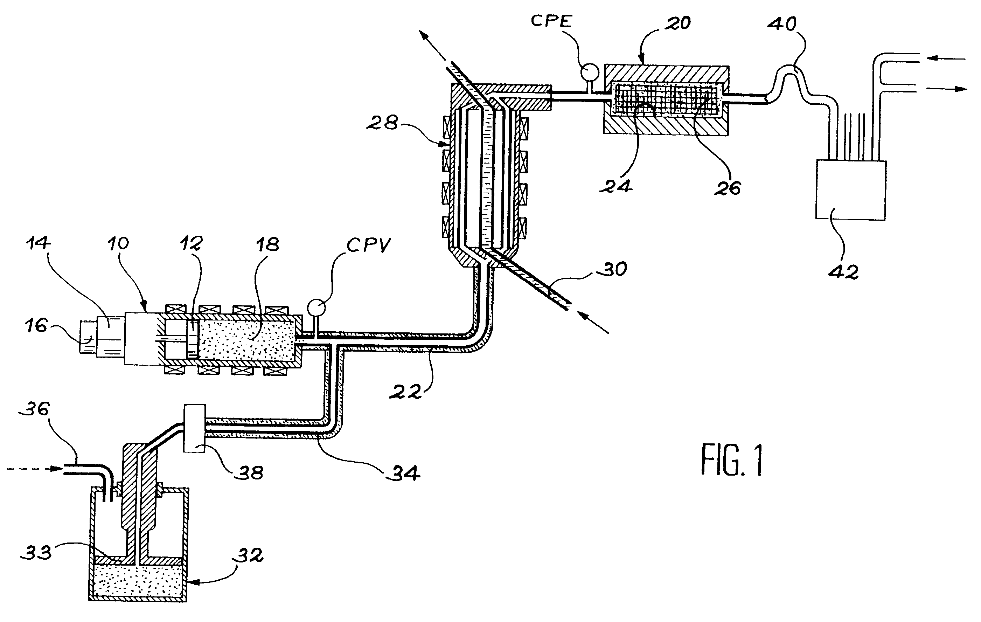

On décrira tout d'abord en se référant à la figure 1 les principaux composants mécaniques d'une installation de moulage par transfert de résine, adaptée à la mise en oeuvre du procédé selon l'invention. Cette installation comprend un vérin d'injection 10 dont le piston 12 est actionné par un moteur électrique 14. Ce moteur électrique 14 est équipé d'un variateur de vitesse (non illustré) et d'un codeur 16.

La résine 18 présente dans le vérin 10 est injectée par ce dernier dans un moule 20, au travers d'un tube d'injection 22.

Le moule 20 comporte intérieurement une empreinte 24 dont la forme est complémentaire de celle de la pièce à fabriquer. Avant que le moule 20 n'ait été fermé et raccordé sur le tube d'injection 22, une préforme fibreuse sèche 26 est placée dans l'empreinte 24. En outre, le moule 20 est associé à des moyens (non représentés) permettant d'appliquer sur la préforme 26 un effort de compactage de valeur réglable. A titre d'exemple nullement limitatif, ces moyens d'application d'un effort de compactage sur la préforme peuvent notamment comprendre une ou plusieurs vessies gonflables (non représentées) placées avec la préforme 26 dans l'empreinte 24 du moule, comme l'enseigne notamment le document FR-A-2 720 028.

Un échangeur thermique 28 est placé sur le tube d'injection 22, entre le vérin 10 et le moule 20. Une circulation d'eau 30 ou tout système équivalent permet d'amener la résine à la température désirée, à l'entrée du moule 20. A cet effet, l'échangeur thermique 28 peut être équipé de moyens de régulation de température, d'une manière connue qui ne fait pas partie de l'invention.

La partie mécanique de l'installation de moulage illustrée sur la figure 1 comprend aussi un pot 32 d'amenée de résine, raccordé sur le tube d'injection 22 par un tube 34, immédiatement à la sortie du vérin 10. Le pot 32 est équipé d'un piston 33 permettant de refouler la résine vers le vérin 18 lorsque de l'air comprimé est injecté dans le pot par un tube 36. Le transfert de la résine du pot 32 vers le vérin 10 est contrôlé par un régulateur 38 placé dans le tube 34. Si nécessaire, la résine peut transiter par un pot de débullage (non illustré) avant d'être transférée dans le pot 32.

En aval du moule 20 et à l'opposé du tube d'injection 22, la cavité 24 du moule 20 est reliée par un tube d'évacuation 40 à un pot de décantation 42.

Des vannes (non illustrées) sont placées dans les différents tubes 22, 34 et 40, notamment afin de permettre d'isoler entre eux les différents appareils de l'installation. Des moyens (non représentés) permettent également d'effectuer la purge de cette dernière lorsque l'injection de résine est terminée.

Conformément à l'invention, une installation telle que celle qui vient d'être décrite en se référant à la figure 1 est pilotée de manière automatisée ou semi-automatisée, afin que l'injection de la résine dans le moule 20 s'effectue autant que possible à un débit de consigne Q constant sans pour autant que la pression instantanée PE à l'entrée du moule 20 n'excède une consigne de pression PEmax.

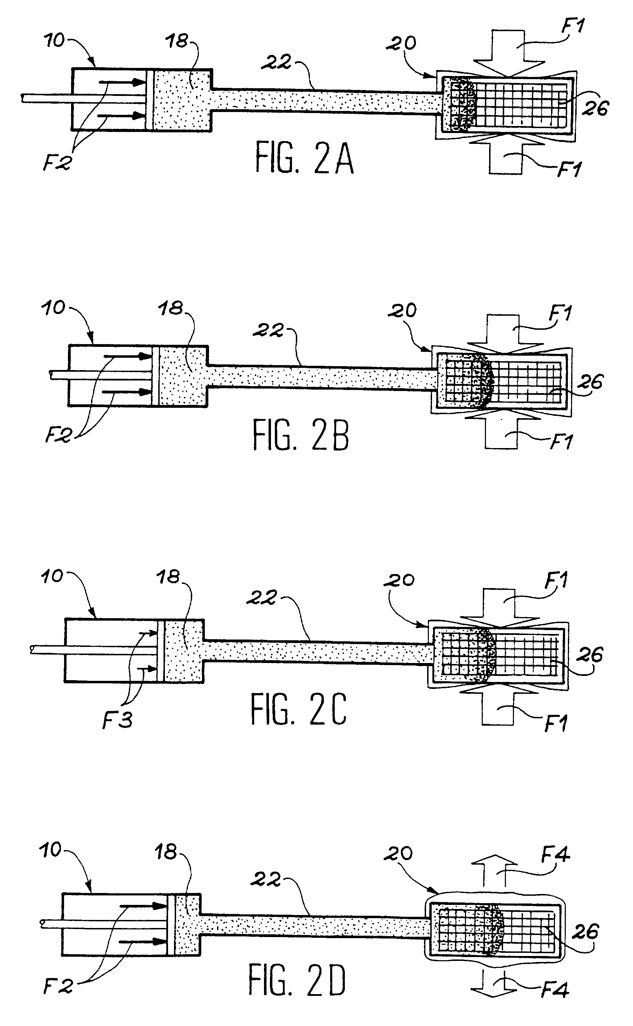

A cet effet, le pilotage de l'injection de la résine s'effectue selon un cycle dont les principales étapes vont à présent être décrites en se référant aux figures 2A à 2D.

Les figures 2A et 2B illustrent de façon très schématique la première étape du procédé de fabrication selon l'invention. Cette première étape constitue l'étape de base du procédé, c'est-à-dire l'étape à laquelle revient automatiquement le système dès que certaines conditions sont satisfaites. De ce point de vue, le système peut être considéré comme "réversible".

Comme on l'a schématisé par les flèches F1 sur les figures 2A et 2B, cette première étape se caractérise par un fort compactage de la préforme fibreuse 26 contenue dans le moule 20. Plus précisément, ce fort compactage est déterminé afin que le taux volumique de fibres dans la pièce obtenue soit supérieur à 58 %.

Cette première étape du procédé selon l'invention se caractérise par ailleurs par le fait qu'on injecte la résine 18 dans le moule 20 contenant la préforme fibreuse 26 fortement compactée, à un débit de consigne Q constant. Ce débit de consigne Q est symbolisé par les flèches F2 sur les figures 2A et 2B. La régulation du débit d'injection de la résine est assurée par le vérin 10, d'une manière qui sera décrite ultérieurement.

L'exécution de cette première étape du procédé de fabrication selon l'invention est conditionnée par le fait que la pression instantanée PE à l'entrée du moule 20 soit inférieure à une consigne de pression PEmax. La pression instantanée PE est mesurée par un capteur de pression CPE (figure 1) monté sur le tube 22 à l'entrée du moule 20.

La figure 2B illustre la poursuite de l'injection de la résine 18 dans le moule 20, conformément à la première étape du procédé selon l'invention, avant que la pression instantanée PE à l'entrée du moule n'atteigne la consigne de pression PEmax. Cette consigne de pression PEmax est déterminée à l'avance, en fonction des caractéristiques de la pièce que l'on désire fabriquer, afin que la pression induite dans le moule lors de l'injection de la résine ne risque pas d'endommager les fibres de la préforme 26 ou d'en modifier l'orientation. Il est à noter que la valeur de cette consigne de pression PEmax peut, dans certains cas, être modifiée en cours d'injection. Une telle modification peut notamment être justifiée par un changement de caractéristiques d'une région du moule à l'autre dû, par exemple, à l'utilisation de fibres de natures différentes.

La figure 2C illustre une deuxième phase du procédé de fabrication selon l'invention. Le passage à cette deuxième phase intervient automatiquement lorsque la pression instantanée PE mesurée à l'entrée du moule 20 atteint la consigne de pression PEmax. Cette situation se produit naturellement, en l'absence de tout changement de la consigne de pression PEmax, du fait que la résistance à l'avancement de la résine 18 augmente au fur et à mesure de l'avancée du front de résine dans le moule 20, en raison de la présence de la préforme 26 fortement compactée. Le passage à la deuxième étape du procédé, illustrée sur la figure 2C, se produit également lorsque la consigne de pression PEmax est réduite au cours de l'injection de la résine dans le moule à une valeur telle que la pression instantanée PE mesurée à l'entrée du moule 20 soit au moins égale à la nouvelle consigne de pression.

Dans tous les cas, cette deuxième étape du procédé de fabrication selon l'invention se caractérise par une réduction du débit d'injection de la résine dans le moule 20. Cette réduction, assurée par le vérin 10 d'une manière qui sera expliquée par la suite, est réalisée de façon à maintenir la pression instantanée PE à l'entrée du moule 20 à une valeur sensiblement égale à la consigne de pression PEmax. Au cours de cette deuxième étape, ce débit est réduit à une valeur q variable symbolisée par les flèches F3 sur la figure 2C.

Lors de la fabrication d'une pièce de grandes dimensions, le passage à la deuxième étape du procédé de fabrication selon l'invention peut intervenir plusieurs fois, bien avant la fin de l'injection de la résine dans le moule. En effet, comme on l'a déjà noté, ce passage peut avoir différentes origines, qui ont toutes pour conséquence une variation, parfois brutale, de la pression instantanée PE mesurée à l'entrée du moule. Il est alors souhaitable d'assurer aussi rapidement que possible un retour vers une injection à débit régulé, c'est-à-dire un retour vers la première étape décrite précédemment en se référant au figures 2A et 2B. En effet, on sait qu'une injection de résine à débit régulé constitue la condition essentielle afin d'obtenir une pièce homogène et pratiquement dépourvue de porosité.

Pour permettre ce retour vers la première étape, le procédé selon l'invention comprend une troisième étape, illustrée sur la figure 2D, qui se caractérise par une réduction du compactage de la préforme fibreuse 26, schématisée par les flèches F2 sur la figure 2D. Du fait de cette réduction du compactage de la préforme 26, la pression instantanée PE à l'entrée du moule 20 descend immédiatement en dessous de la consigne de pression PEmax. Par conséquent, la réduction du compactage de la préforme 26 peut être suivie pratiquement instantanément d'une remontée du débit d'injection de la résine 18 dans le moule 20 jusqu'au débit de consigne Q, comme on l'a également illustré par les flèches F2 sur la figure 2D.

Dès lors, un fort compactage peut à nouveau être effectué sur la préforme 26, de sorte qu'on en revient alors à la première étape du procédé de fabrication selon l'invention et qu'un nouveau cycle de ce procédé est initié.

Le procédé de fabrication selon l'invention constitue ainsi un procédé réversible, qui permet de revenir automatiquement à une étape d'injection de la résine à débit constant alors que la préforme fibreuse est fortement comprimée, dès que la pression instantanée PE à l'entrée du moule devient inférieure à la consigne de pression PEmax.

Grâce à ces caractéristiques, la fabrication d'une pièce de grandes dimensions et présentant un taux volumique de fibres supérieur à 58 % peut être assurée en ayant recours à un nombre de cycles plus ou moins grand selon que le volume de la pièce est plus ou moins important. Il est à noter que cette possibilité offerte par le procédé selon l'invention est assurée tout en préservant les qualités intrinsèques des techniques RTM, en garantissant une porosité particulièrement faible et en assurant que les fibres de la préforme ne subissent aucune dégradation et aucun changement d'orientation lors de l'injection.

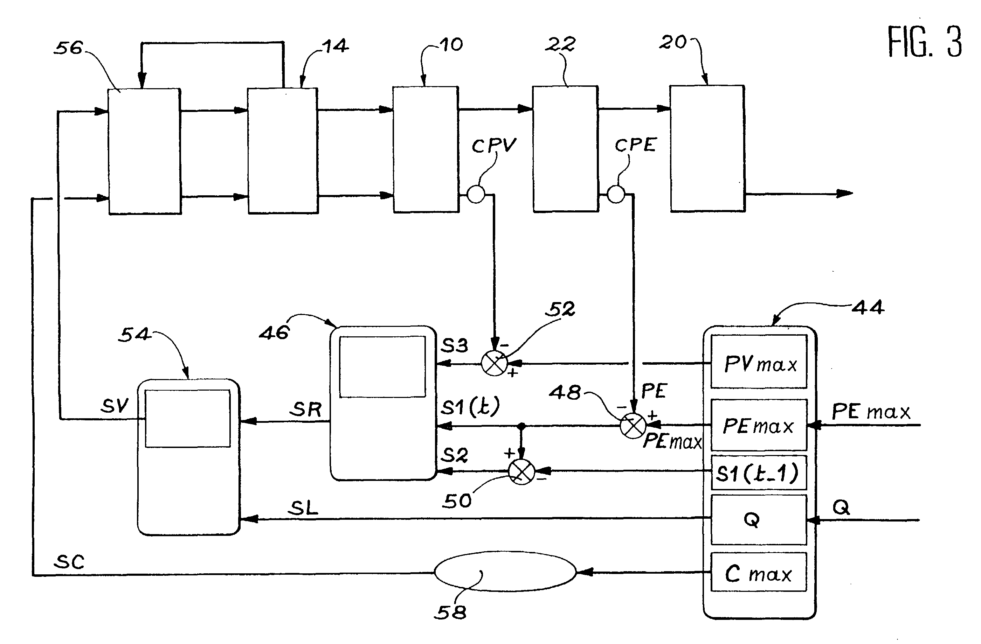

On décrira à présent plus en détail la mise en oeuvre du procédé de fabrication selon l'invention, en se référant à la figure 3, qui illustre schématiquement les différents moyens assurant le pilotage du vérin 10, ainsi que leur mode d'action.

Dans la forme de réalisation représentée, un automate 44 assure notamment la fonction de régulation en débit au travers d'une carte de régulation 46 en logique floue. Les différents paramètres de cette carte de régulation 46 peuvent être configurés à volonté en agissant sur l'automate 44.

Comme on l'a illustré schématiquement sur la figure 3, l'automate 44 dispose d'organes d'entrée tels que des roues codeuses permettant d'introduire dans le système une consigne de pression PEmax ainsi qu'un débit de consigne Q. Le choix de la consigne de pression PEmax dépend essentiellement des caractéristiques de la pièce que l'on désire fabriquer. Le débit de consigne Q est choisi quant à lui en fonction du volume du moule à remplir et en fonction du temps de gélification à la température d'injection pour le système de résine sélectionné.

D'autres consignes sont également entrées dans l'automate 44, généralement une fois pour toute pour une installation d'injection déterminée. Dans l'exemple représenté, ces consignes comprennent une consigne PVmax de pression maximale admissible à la sortie du vérin 10, compte tenu des caractéristiques mécaniques de ce dernier. Elles comprennent également une consigne Cmax de couple maximal autorisé pour le moteur électrique 14.

Comme on l'a illustré schématiquement en 48 sur la figure 3, l'automate 44 calcule en temps réel un premier signal S1 représentatif de la différence ou de l'écart ΔPE entre la consigne de pression PEmax et la pression instantanée PE mesurée par le capteur CPE à l'entrée du moule 20. Ce premier signal S1 constitue l'une des grandeurs d'entrée injectées dans la carte de régulation 46 à logique floue.

Comme on l'a illustré en 50 sur la figure 3, l'automate 44 élabore aussi en temps réel un deuxième signal S2, représentatif de la différence ERPE entre deux signaux S1 consécutifs, c'esc-à-dire du taux de variation du signal S1. Plus précisément, ce deuxième signal S2 est égal à la différence entre le dernier signal S1 calculé par le comparateur 48 à l'instant t et le signal Si immédiatement antérieur, à l'instant t-1. Le deuxième signal S2 constitue également une grandeur d'entrée injectée dans la carte de régulation 46 à logique floue.

Dans la forme de réalisation illustrée sur la figure 3, on injecte aussi dans la carte de régulation 46 à logique floue une troisième grandeur d'entrée constituée par un troisième signal S3. Ce troisième signal est représentatif de la différence ou de l'écart ΔPV entre la pression maximale PVmax admissible à la sortie du vérin 10 et la valeur instantanée de la pression PV mesurée par le capteur CPV à la sortie du vérin 10. Le troisième signal S3 est également élaboré par l'automate 44, comme on l'a illustré schématiquement en 52 sur la figure 3.

A partir des trois signaux S1, S2 et S3, la carte de régulation 46 en logique floue élabore en permanence un signal SR de régulation de débit. Les caractéristiques essentielles des règles qui président à l'élaboration de ce signal SR de régulation de débit seront exposées brièvement par la suite. On notera dès à présent que ce signal SR de régulation de débit est en réalité un signal de vitesse, qui détermine à tout instant la vitesse à laquelle le moteur électrique 14 doit tourner pour satisfaire les règles contenues dans la carte de régulation 46 en logique floue.

Le signal SR de régulation de débit est injecté dans un automate 54 de limitation de débit. Cet automate 54 reçoit par ailleurs un signal SL, dont le niveau constant est représentatif du débit de consigne Q préalablement rentré dans l'automate 44.

L'automate 54 de limitation de débit délivre un signal de commande SV qui est également un signal de vitesse. Le signal de commande SV est injecté dans un variateur de vitesse 56 associé au moteur électrique 14 assurant la commande du vérin d'injection 10. Ce signal de commande SV est égal au signal SL tant que le signal SR de régulation de débit est supérieur ou égal à ce signal SL. En revanche, le signal de commande SV est égal au signal SR de régulation de débit lorsque ce signal SR est inférieur au signal SL représentatif du débit de consigne Q.

Par conséquent, le moteur électrique 14 est piloté en permanence, par le variateur de vitesse 56, de façon telle que le débit d'injection de la résine dans le moule 20 soit constant et égal au débit de consigne Q tant que le signal SR de régulation de débit est supérieur au signal SL représentatif de ce débit de consigne. En revanche, le moteur électrique 14 piloté par le variateur de vitesse 56 actionne le vérin d'injection 10 de façon telle que l'injection de la résine dans le moule 20 s'effectue à un débit q inférieur au débit de consigne Q, lorsque la valeur du signal SR de régulation de débit est inférieure à celle du signal SL. Le débit d'injection q évolue alors selon la valeur du signal SR.

Comme on le verra ultérieurement, le signal SR de régulation de débit est déterminé par la carte de régulation 46 à logique floue principalement à partir de la pression instantanée PE à l'entrée du moule 20. Le système illustré schématiquement sur la figure 3 permet donc bien de mettre en oeuvre le procédé de fabrication décrit précédemment en se référant aux figures 2A à 2D.

Comme on l'a également illustré sur la figure 3, le variateur de vitesse 56 qui pilote le moteur électrique 14 de commande du vérin 10 reçoit également un signal SC, représentatif du couple maximal Cmax autorisé pour le moteur électrique 14. Ce signal SC est dérivé directement de la valeur du couple maximal Cmax entrée dans l'automate 44, après passage dans un circuit 58 de mise à l'échelle.

On décrira à présent plus en détail l'élaboration du signal SR de régulation de débit, dans la carte de régulation 46 à logique floue, à partir des trois signaux d'entrée S1, S2 et S3 qui représentent respectivement les trois grandeurs d'entrée ΔPE, ERPE et ΔPV.

Le recours à la logique floue est justifié par la nécessité de gérer simultanément deux régulations de pression (PE à l'entrée du moule et PV à la sortie du vérin). Le recours à la logique floue a aussi pour intérêt de permettre le contrôle de l'injection sans qu'il soit nécessaire de connaître la modélisation mathématique de chaque élément (variateur de vitesse 56, moteur électrique 14, réducteur associé à ce moteur, vérin 10, tuyauterie 22, échangeur 28, vannes, résine, etc.).

Le traitement en logique floue, effectué dans la carte de régulation 46, peut schématiquement être décomposé en trois étapes :
- transformation de chacun des signaux d'entrée instantanés S1, S2, S3 en une partie floue (étape d'entrée) ;
- transformation des parties floues dérivées des signaux d'entrée en une partie floue représentative du signal de sortie (étape d'inférence) ; et
- transformation de la partie floue issue de l'étape d'inférence en un signal de sortie instantané SR (étape de sortie).

Ce traitement permet de modéliser le savoir faire des opérateurs utilisant habituellement les installations de moulage par transfert de résine. Concrètement, cette modélisation est obtenue sur la base de règles logiques qui décrivent en termes flous les conditions possibles du système et les actions appropriées pour ces conditions. Ces règles logiques correspondent à l'étape d'inférence.

Les transformations effectuées lors des étapes d'entrée et de sortie sont assurées en affectant des fonctions d'appartenance à chacune des grandeurs d'entrée et à la grandeur de sortie. Ces fonctions d'appartenance sont des ensembles flous, définis mathématiquement par des fonctions généralement triangulaires ou trapézoïdales.

Ainsi, dans la carte de régulation 46, à logique floue, la valeur instantanée de chacun des signaux S1, S2 et S3 est comparée à des fonctions d'appartenance définies préalablement pour chacune des grandeurs d'entrée ΔPE, ERPE et ΔPV.

Dans la forme de réalisation décrite, les fonctions d'appartenance affectées à l'écart ΔPE entre la consigne de pression PEmax et la pression instantanée PE à l'entrée du moule 20 sont : négatif grand (Ng), négatif moyen (Nm), négatif petit (Np), zéro (Ze), positif petit (Pp), positif moyen (Pm) et positif grand (Pg).

De façon comparable, les fonctions d'appartenance affectées au taux de variation ERPE, qui correspond à la différence entre deux premiers signaux Si consécutifs sont : négatif grand (Ng), négatif moyen (Nm), négatif petit (Np), zéro (Ze), positif petit (Pp), positif moyen (Pm) et positif grand (Pg).

Enfin, la seule fonction d'appartenance affectée à l'écart la grandeur d'entrée ΔPV, représentatif de la différence entre la pression maximale PVmax admissible à la sortie du vérin 10 et la pression instantanée PV mesurée à la sortie de ce vérin, est : mauvais.

Dans la carte de régulation 46 à logique floue, on affecte également des fonctions d'appartenance à la grandeur de sortie, constituée dans ce cas par les changements ΔSR de la vitesse de rotation du moteur électrique 14, représentée par le signal SR de régulation de débit. Dans la forme de réalisation décrite, les fonctions affectées à la grandeur de sortie sont : négatif grand (Ng), négatif moyen (Nm), négatif petit (Np), zéro (Ze), positif petit (Pp), positif moyen (Pm) et positif grand (Pg).

Les fonctions d'appartenance des grandeurs d'entrée sont reliées aux fonctions d'appartenance de la grandeur de sortie par une table de règles. Si l'on ne tient pas compte de l'influence de la grandeur d'entrée ΔPV (qui n'intervient en pratiqué que très rarement), cette table de règles a deux entrées (ΔPE et ERPE) et une sortie (ΔSR). Cette table de règles est établie expérimentalement. A titre d'exemple, elle peut prendre la forme illustrée ci-dessous :

**TABLE DE REGLES**

| ΔSR | | ERPE | | | | | | |
|---|---|---|---|---|---|---|---|---|
| | | Ng | Nm | Np | Ze | Pp | Pm | Pg |
| Δ PE | Ng | Ng | Ng | Ng | Ng | Ng | Ng | Ng |
| | Nm | Ng | Ng | Ng | Ng | Nm | Nm | Nm |
| | Np | Nm | Nm | Nm | Np | Ze | Ze | Ze |
| | Ze | Ze | Ze | Ze | Ze | Ze | Ze | Ze |
| | Pp | Ze | Ze | Ze | Pp | Pm | Pm | Pm |
| | Pm | Pm | Pm | Pm | Pg | Pg | Pg | Pg |
| | Pg | Pg | Pg | Pg | Pg | Pg | Pg | Pg |

Par ailleurs, la seule règle qui relie la grandeur d'entrée ΔPV à la grandeur de sortie ΔSR est :
- si ΔPV = MAUVAIS, alors ΔSR = Ng.

Cette règle est prioritaire, c'est-à-dire qu'elle s'impose quelles que soient les valeurs des autres grandeurs d'entrée.

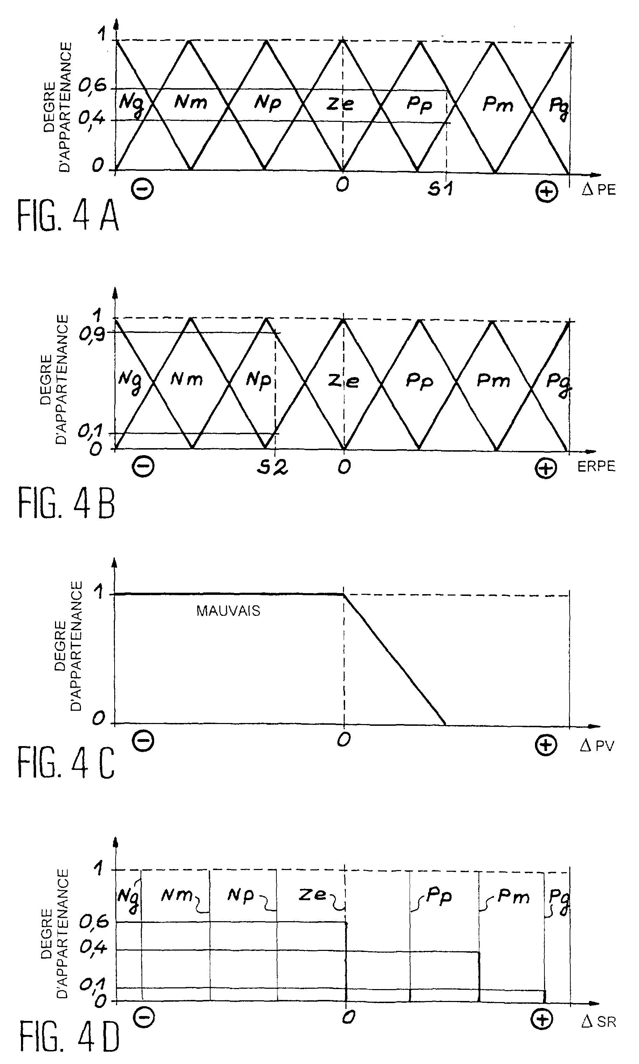

Les fonctions d'appartenance affectées à l'écart ΔPE, au taux de variation ERPE, à l'écart ΔPV et aux changements ΔSR à apporter à la vitesse de rotation du moteur électrique 14 sont illustrées respectivement sur les figures 4A, 4B, 4C et 4D.

Dans le cas des grandeurs d'entrée ΔPE et ERPE (figures 4A et 4B), les fonctions d'appartenance ont, par exemple, la forme de triangles isocèles identiques, qui se recouvrent partiellement et dont les bases sont situées sur l'axe des abscisses et régulièrement décalées les unes par rapport aux autres. La valeur instantanée de la grandeur correspondante est portée ou lue sur l'axe des abscisses, selon qu'il s'agit des grandeurs d'entrée ou de la grandeur de sortie. L'axe des ordonnées détermine le degré d'appartenance de la grandeur avec chacune des fonctions, la hauteur des triangles isocèles représentatifs de ces fonctions correspondant à l'unité. Les dimensions et écartement des bases des triangles sont déterminés par l'expérience.

Dans le cas de la grandeur d'entrée ΔPV (figure 4C), la fonction d'appartenance "MAUVAIS" a la forme d'un trapèze rectangle dont la hauteur correspond à l'unité.

Enfin, comme l'illustre la figure 4D, les fonctions d'appartenance correspondant à la grandeur de sortie ΔSR sont des segments de droite régulièrement espacés et parallèles à l'axe des ordonnées. La longueur de chaque segment est égale à l'unité. Chaque segment correspond donc à une augmentation (sens +) ou une réduction (sens -) de vitesse bien déterminée.

Tous les paramètres correspondant à la table de règles et aux fonctions d'appartenance sont introduits une fois pour toute dans la carte de régulation 46 à logique floue.

En supposant la pression instantanée PV à la sortie du vérin sensiblement inférieure à la pression maximale admissible PVmax, comme c'est habituellement le cas, la carte de régulation 46 à logique floue détermine le changement ΔSR à apporter au signal SR de régulation de débit à partir des valeurs instantanées des grandeurs d'entrée ΔPE et ERPE données par les signaux S1 et S2.

Ainsi, la carte de régulation 46 à logique floue établit, à l'entrée, le degré de conformité de chacune des grandeurs d'entrée ΔPE et ERPE avec les fonctions d'appartenance se rapportant à ces grandeurs.

Plus précisément et à titre d'exemple, on supposera que la valeur du premier signal S1, reportée sur l'axe des abscisses des fonctions d'appartenance se rapportant à l'écart ΔPE, se trouve à la fois dans les triangles isocèles représentatifs des fonctions d'appartenance Pm et Pp associés à cette grandeur (figure 4A). Cela signifie que l'écart entre la consigne de pression PEmax et la pression instantanée PE mesurée à l'entrée du moule est positif et que son amplitude est entre moyen et petit. Le degré d'appartenance 0,4 et 0,6 de cet écart ΔPE respectivement à chacune des fonctions d'appartenance Pm et Pp est donné par l'ordonnée de l'intersection des côtés du triangle qui la représente avec la hauteur issue du point représentatif du premier signal.

On supposera par ailleurs, toujours à titre d'exemple, que la valeur du deuxième signal S2, reportée sur l'axe des abscisses des fonctions d'appartenance se rapportant aux taux de variation ERPE du premier signal, se trouve à la fois dans les triangles isocèles représentatifs des fonctions d'appartenance Ze et Np associées à cette grandeur (figure 4B). Cela signifie que la pression à l'entrée du moule diminue de façon extrêmement faible. Le degré d'appartenance 0,1 et 0,9 du taux de variation ERPE respectivement à chacune de ces fonctions d'appartenance Ze et Np est obtenu comme pour l'écart ΔPE.

Dans les hypothèses qui précèdent, quatre des règles de la table de règles donnée précédemment à titre d'exemple sont concernées :
- si ΔPE = Pm et ERPE = Ze, alors ΔSR = Pg (1ère règle) ;
- si ΔPE = Pm et ERPE = Np, alors ΔSR = Pm (2ème règle) ;
- si ΔPE = Pp et ERPE = Ze, alors ΔSR = Pp (3ème règle); et
- si ΔPE = Pp et ERPE = Np, alors ΔSR = Ze (4ème règle).

Pour chacune de ces quatre règles, la carte de régulation 46 à logique floue compare les degrés de conformité de chacune des grandeurs d'entrée ΔPE et ERPE avec les fonctions d'appartenance concernées par la règle considérée, et le degré de conformité le plus faible est retenu.

Ainsi, dans le cas de la première règle ci-dessus, les fonctions d'appartenance concernées sont la fonction Pm pour l'écart ΔPE et la fonction Ze pour le taux de variation ERPE.

Dans le cas des signaux S1 et S2 dont les valeurs ont été portées à titre d'exemple sur les figures 4A et 4B, les degrés de conformité correspondant à ces fonctions d'appartenance Pm et Ze sont respectivement 0,4 et 0,1. C'est donc cette dernière valeur de 0,1 qui est retenue. La même démarche conduit à retenir respectivement pour les deuxième, troisième et quatrième règles des degrés de conformité de 0,4, de 0,1 et de 0,6.

Le degré de conformité ainsi retenu pour chacune des règles considérées est appliqué à la fonction d'appartenance correspondant à cette règle, pour la grandeur de sortie ΔSR.

Ainsi et comme on l'a illustré sur la figure 4D, cela conduit à affecter respectivement aux fonctions d'appartenance Pg, Pm, Pp et Ze de la grandeur de sortie ΔSR des degrés de conformité de 0,1, de 0,4, de 0,1 et de 0,6, dans le cas des signaux S1 et S2 portés à titre d'exemple sur les figures 4A et 4B.

A la sortie, la carte de régulation 46 à logique floue détermine la position du centre de gravité de l'ensemble des fonctions d'appartenance Pg, Pm, Pp, et Ze ainsi pondérées par les degrés de conformités de 0,1, de 0,4, de 0,1 et de 0,6. Elle modifie alors la précédente valeur du signal SR de régulation de débit en déterminant le changement ΔSR à apporter à cette valeur à partir de l'abscisse de ce centre de gravité. Dans l'exemple considéré, le signal SR augmente d'une valeur légèrement supérieure à celle qui correspond à la fonction d'appartenance Pp.

Bien entendu, l'invention n'est pas limitée à la forme de réalisation qui vient d'être décrite en se référant aux figures. Ainsi, dans le cas où l'installation comporte un vérin d'injection apte à supporter toutes les pressions susceptibles d'être atteintes dans les gammes de fabrication concernées, la prise en compte de la pression instantanée à la sortie du vérin n'est pas nécessaire.

## Revendications

1. Procédé de fabrication de pièces en matériau composite, par moulage par transfert de résine dans un moule (20) contenant une préforme fibreuse (26), **caractérisé par le fait qu'**il comprend les étapes suivantes :
a)fort compactage de la préforme fibreuse (26) dans le moule (20), de façon à obtenir un taux volumique de fibres supérieure à 58 %, et injection simultanée de résine dans le moule à un débit de consigne (Q) constant, tant qu'une pression instantanée (PE) à l'entrée du moule est inférieure à une consigne de pression (PEmax) ;
b)réduction du débit d'injection de la résine dans le moule (20), de façon à maintenir la pression instantanée (PE) à une valeur sensiblement égale à la consigne de pression (PEmax) , lorsque cette consigne est atteinte ;
c)réduction temporaire du compactage de la préforme fibreuse (26) dans le moule (20) ;
d)remontée progressive du débit d'injection de la résine dans le moule (20), jusqu'au débit de consigne (Q) ; et
e)retour à l'étape a).

2. Procédé selon la revendication 1, **caractérisé par le fait qu'**une réduction de la consigne de pression (Pmax) au cours de l'injection de la résine dans le moule (20), entraîne un passage immédiat à l'étape b) lorsque la pression instantanée (PE) est au moins égale à la nouvelle consigne de pression.

3. Procédé selon l'une quelconque des revendications 1 et 2, **caractérisé par le fait qu'**on élabore en permanence un signal (SR) de régulation de débit, à partir d'au moins un premier signal (S1) représentatif d'une différence entre la consigne de pression (PEmax) et la pression instantanée (PE) et **par le fait qu'**on compare ce signal (SR) de régulation de débit au débit de consigne (Q), pour émettre un signal de commande (SV) apte à commander l'injection de la résine à ce débit de consigne (Q) constant, conformément à l'étape a), lorsque le signal (SR) de régulation de débit est au moins égal au débit de consigne (Q), et apte à commander l'injection de la résine à un débit réduit (q) qui varie avec le signal (SR) de régulation de débit, conformément à l'étape b), lorsque ce signal (SR) de régulation de débit est inférieur au débit de consigne (Q).

4. Procédé selon la revendication 3, **caractérisé par le fait qu'**on élabore le signal (SR) de régulation de débit également à partir d'un deuxième signal (S2) représentatif d'une différence entre deux premiers signaux (S1) consécutifs.

5. Procédé selon la revendication 3, **caractérisé par le fait que** le signal de commande (SV) est un signal de vitesse, injecté dans un variateur de vitesse (56) associé à un moteur électrique (14) de commande d'un vérin (10) d'injection de la résine dans le moule (20).

6. Procédé selon la revendication 5, **caractérisé par le fait qu'**on élabore le signal (SR) de régulation de débit également à partir d'un troisième signal (S3) représentatif d'une différence entre une pression maximale (PVmax) admissible à la sortie du vérin (10) et une pression instantanée (PV) à la sortie du vérin (10).

7. Procédé selon l'une quelconque des revendications 3 à 6, **caractérisé par le fait qu'**on injecte aussi dans le variateur (56) un signal (SCmax) représentatif d'un couple maximal autorisé pour le moteur électrique (14).

8. Procédé selon l'une quelconque des revendications 3 à 7, **caractérisé par le fait qu'**on élabore le signal (SR) de régulation de débit en logique floue.

## Patentansprüche

1. Verfahren zur Herstellung von Teilen aus Verbundmaterial durch Transfergießen von Harz in einer Form (20), die einen Faser-Vorformling (26) enthält,
**dadurch gekennzeichnet, dass** es die folgenden Schritte umfasst:
a) starkes Verdichten des Faser-Vorformlings (26) in der Form (20), um einen Faservolumensanteil von mehr als 58% zu erhalten, und gleichzeitiges Einspritzen von Harz in die Form mit einer konstanten Einstellwertmenge (Q), derart, dass ein momentaner Druck (PE) am Eingang der Form niedriger ist als eine Druck-Einstellgröße (PEₘₐₓ);
b) Reduzierung der Harz-Einspritzmenge in die Form (20), um den momentanen Druck (PE) auf einem Wert zu halten, der im Wesentlichen gleich der Druck-Einstellgröße (PEₘₐₓ) ist, wenn diese Einstellgröße erreicht ist;
c) temporäre Reduzierung der Verdichtung des Faser-Vorformlings (26) in der Form (20);
d) progressiver Wiederanstieg der Einspritzmenge des Harzes in die Form (20), bis zur Einstellwertmenge (Q); und
e) Rückkehr zu Schritt a).

2. Verfahren nach Anspruch 1, **dadurch gekennzeichnet, dass** eine Reduzierung der Druck-Einstellgröße (Pₘₐₓ) während des Einspritzens des Harzes in die Form (20) einen sofortigen Übergang,zu Schritt b) zur Folge hat, wenn der momentane Druck (PE) wenigstens gleich der neuen Druck-Einstellgröße ist.

3. Verfahren nach einem der Ansprüche 1 und 2, **dadurch gekennzeichnet, dass** permanent ein Mengenregelungssignal (SR) ausgearbeitet wird, aus wenigstens einem ersten Signal (S1), das repräsentativ ist für eine Differenz zwischen der Druck-Einstellgröße (PEₘₐₓ) und dem momentanen Druck (PE), und dadurch, dass man dieses Mengenregelungssignal (SR) mit der Einstellwertmenge (Q) vergleicht, um ein Steuersignal (SV) zu senden, das fähig ist, entsprechend Schritt a) das Einspritzen des Harzes mit dieser konstanten Einstellwertmenge (Q) zu steuern, wenn das Mengenregelungssignal (SR) wenigstens gleich der Einstellwertmenge (Q) ist, und fähig ist, entsprechend Schritt b) das Einspritzen des Harzes mit einer reduzierten Menge (q) zu steuern, die mit dem Mengenregelungssignal (SR) variiert, wenn dieses Mengenregelungssignal (SR) kleiner ist als die Einstellwertmenge bzw. Einstellmengengröße (Q).

4. Verfahren nach Anspruch 3, **dadurch gekennzeichnet, dass** man das Mengenregelungssignal (SR) auch auf Grund eines zweiten Signals (S2) ausarbeitet, das repräsentativ ist für eine Differenz zwischen zwei aufeinanderfolgenden ersten Signalen (S1).

5. Verfahren nach Anspruch 3, **dadurch gekennzeichnet, dass** das Steuersignal (SV) ein Geschwindigkeitssignal ist, das in einen Geschwindigkeitsvariator (56) eingespeist wird, der einem Elektromotor (14) zugeordnet ist, welcher einen Einspritzzylinder (10) des Harzes in die Form (20) betätigt.

6. Verfahren nach Anspruch 5, **dadurch gekennzeichnet, dass** man das Mengenregelungssignal (SR) auch auf Grund eines dritten Signals (S3) erarbeitet, das repräsentativ ist für eine Differenz zwischen einem am Ausgang des Zylinders (10) zulässigen maximalen Druck (PVₘₐₓ) und einem momentanen Druck (PV) am Ausgang des Zylinders (10).

7. Verfahren nach einem der Ansprüche 3 bis 6, **dadurch gekennzeichnet, dass** man in den Variator (56) auch ein Signal (SCₘₐₓ) einspeist, das repräsentativ ist für ein für den Elektromotor (14) zulässiges Moment.

8. Verfahren nach einem der Ansprüche 3 bis 7, **dadurch gekennzeichnet, dass** man das Mengenregelungssignal (SR) in unscharfer Logik ausarbeitet.

## Claims

1. Process for manufacturing composite material parts by resin transfer moulding in a mould (20) containing a fibre pellet (26), **characterised in that** it contains the following steps:
a) strong compression of the fibre pellet (26) in the mould (20), in order to obtain a fibre content of more than 58 %, and simultaneous injection of resin into the mould at a constant reference flow rate (Q), while an instantaneous pressure (PE) at the mould inlet is lower than a reference pressure value (PE max.).
b) a reduction of the injection flow rate of the resin into the mould (20), so that the instantaneous pressure (PE) is maintained at a value that is virtually the same as the reference pressure value (PE max.), when this reference value is reached;
c) a temporary reduction of the compression of the fibre pellet (26) in the mould (20) ;
d) progressive increase of the injection flow rate of the resin into the mould (20) until the reference flow rate (Q) is reached; and
e) return to step a).

2. Process of claim 1, **characterised in that** a reduction of the reference pressure value (P max.) when the resin is being injected into the mould (20) causes an immediate change to step b) when the instantaneous pressure (PE) is at least equal to the new reference pressure value.

3. Process as claimed in either of the claims 1 and 2, **characterised in that** a flow rate regulation signal (SR) is constantly created, at minimum from a first signal (S1) which is representative of a difference between the reference pressure value (PE max.) and the instantaneous pressure (PE), and **in that** this flow rate regulation signal (SR) is compared to the reference flow rate value (Q), to emit a control signal (SV) capable of commanding the resin injection at this constant reference flow rate value (Q), in accordance with step a), when the flow rate regulation signal (SR) is at least equal to the reference flow rate value(Q), and capable of commanding the resin injection at a reduced flow rate (q) which varies with the flow rate regulation signal (SR), in accordance with step b), when this flow rate regulation signal (SR) is lower than the reference flow rate value (Q).

4. Process of claim 3, **characterised in that** the flow rate regulation signal (SR) is also created from a second signal (S2) which is representative of a difference between the two first consecutive (S1) signals.

5. Process of claim 3, **characterised in that** the control signal (SV) is a speed signal entered into a speed variator (56) connected to an electric motor (14) which drives an actuator (10) that injects the resin into the mould (20).

6. Process of claim 5, **characterised in that** the flow rate regulation signal (SR) is also created from a third signal (S3) which is representative of a difference between a maximum permissible pressure (PV max.) at the outlet of the actuator (10) and an instantaneous pressure (PV) at the outlet of the actuator (10).

7. Process of any of claims 3 to 6, **characterised in that** a signal (SC max.), which is representative of a maximum permissible torque value for the electric motor (14), is entered into the variator (56).

8. Process of any of claims 3 to 7, **characterised in that** the flow rate regulation signal (SR) is created in fuzzy logic.
